# DEMANDE DE BREVET EUROPEEN

(11) **EP 3 492 286 A1**
(43) Date de publication de la demande: **05.06.2019**
(21) Numéro de dépôt: 18209173.6
(22) Date de dépôt: 29.11.2018
(51) Int. Cl.: B60C 23/00

(54) **CONTROLEUR DE DISPOSITIF DE LIAISON AU SOL, DISPOSITIF DE LIAISON AU SOL, ET PROCEDE DE REGLAGE AUTOMATIQUE DE DISPOSITIF DE LIAISON AU SOL**

(30) Priorité: 30.11.2017 FR 1761426
(71) Demandeur: Orange, 75015 Paris (FR)
(72) Inventeur: ESNAULT, Régis, 92326 CHATILLON (FR); CORREA, William, 92326 CHATILLON (FR); JEZEQUEL, Dominique, 92326 CHATILLON (FR)

(57) **Abrégé**

L'invention concerne le domaine des transports, notamment automobile. L'invention porte sur un contrôleur de dispositif de liaison au sol d'un véhicule : notamment pneumatique, amortisseur, etc. Un objet de l'invention est un contrôleur apte à régler automatiquement au moins un dispositif de liaison au sol d'un véhicule en fonction d'une donnée caractéristique prédite du parcours actuel du véhicule à partir de données fournies par au moins un capteur du dispositif de liaison au sol. Ainsi, le contrôleur permet d'optimiser la stabilité du véhicule quel que soit le parcours notamment sur une route dégradée ou dans des virages... notamment afin d'éviter un déport du véhicule de sa trajectoire en prenant en considération différentes caractéristiques relatives aux parcours tels que la vitesse, l'état de la chaussée, les conditions météorologiques, la pression des pneumatiques, etc. ; et certains accidents.

## Description

L'invention concerne le domaine des transports, notamment automobile. L'invention porte sur un contrôleur de dispositif de liaison au sol d'un véhicule, notamment apte à régler automatiquement la pression de pneumatique(s) et/ou la position d'amortisseur(s), etc.

Dans le domaine des transports, plusieurs dispositifs de liaison au sol participent à la sécurité du véhicule en assurant le contact du véhicule avec le sol et particulièrement la stabilité du véhicule.

Les pneumatiques assurent le contact des roues du véhicule avec le sol en procurant une certaine adhérence, un amortissement des chocs et des vibrations facilitant le déplacement des véhicules. Lors du roulement, ils sont le lieu de dissipations énergétiques importantes liées essentiellement à la déformation du pneumatique relativement au poids du véhicule qu'il doit supporter et aux efforts subit lors des virages, des accélérations et des freinages... Cela peut conduire à la destruction de la bande de roulement du pneumatique si celui-ci et sous-gonflé. Or, un pneumatique sur-gonflé ou sous-gonflé provoque une diminution de l'adhérence qui peut être dangereuse en virage ou au freinage en augmentant la distance de freinage. Les chiffres de la sécurité routière en France indiquent qu'en 2003, les pneumatiques étaient associés à 9 % des accidents mortels survenus sur autoroutes.

Un pneumatique sous-gonflé subit une déformation plus importante des flancs et de la bande de roulement, dont les principales conséquences sont une usure plus rapide du pneumatique, une mauvaise tenue de route, notamment sous la pluie, un risque augmenté d'éclatement lié à un échauffement excessif et une augmentation de la consommation de carburant du véhicule. Un pneumatique sur-gonflé s'use également plus rapidement mais au centre de la bande de roulement et est plus sensible aux arrachements de gomme (patinage notamment). Les flancs du pneumatique sont plus rigide ce qui diminue la surface de contact entre le pneumatique et le sol et donc le confort et l'adhérence.

Pour alerter le conducteur des risques relatifs à la pression des pneumatiques, certains véhicules récents sont équipés d'un système de contrôle automatique de la pression des pneumatiques (TPMS). Ainsi, le conducteur alerté qu'un pneumatique est sous- ou sur-gonflé peut s'arrêter dans une station-service pour rectifier la pression des pneumatiques. La pression étant faite manuellement, le conducteur soit diffère la rectification de la pression des pneumatique (notamment par manque de temps ou absence de gonfleur à disposition), soit rectifiée la pression du pneumatique mais pas à froid entrainant un sous-gonflage du pneumatique (puisque la pression recommandée est mesurée à froid).

Pour améliorer les performances de sécurité relatives aux pneumatiques, Goodyear (marque déposée) a proposé en 2012 une technologie de gonflage automatique, nommée Air Maintenance Technolgy en anglais (ATM), qui assure le maintien de la pression recommandée dans les pneumatiques sans l'aide d'une pompe externe.

Néanmoins, en fonction de la vitesse du véhicule sur un parcours et/ou de la qualité de la route (virage, type de revêtement ...), la pression recommandée n'est pas la mieux adaptée à l'adhérence du véhicule et donc à la sécurité. En effet, un conducteur d'un véhicule tout terrain adapte la pression des pneumatiques en fonction du terrain sur lequel le véhicule évolue : par exemple, une pression élevée pour un sol dur, une pression faible sur un sol mou, irrégulier, glissant... C'est pourquoi, notamment pour les véhicules de conduite tout terrain (off road en anglais), la société Sygeon propose un système de gonflage-dégonflage Syegon power+ (marque déposée) qui comprend des capteurs de pressions et une centrale électropneumatique qui se fixent au pneumatiques et une télécommande. Ainsi, le conducteur choisit au moyen de la télécommande entre 4 différentes pressions préprogrammées et le système de gonflage-dégonflage modifie la pression des pneumatiques en conséquence.

Cette adaptation manuelle de la pression est sujette aux erreurs du conducteur : erreurs de saisie de commande, erreurs d'évaluation des caractéristiques du parcours à venir... et généralement mise en oeuvre avant le début d'un parcours car complexe à mettre en oeuvre durant le parcours (le conducteur est déjà occupé à la conduite). Donc, si le conducteur commet une erreur dans la sélection de la pression ou qu'il modifie son parcours, la pression des pneumatiques ne sera pas, respectivement plus, adaptée au parcours avec les risques connus en termes d'adhérence du véhicule.

D'autres dispositifs de liaison au sol sont installés sur les véhicules participant à la stabilité et donc à la sécurisation du véhicule, tel que les suspensions qui réalisent une liaison élastique entre les masses suspendues du véhicule (notamment le châssis) et les masses non suspendues (en particulier les roues). L'utilisation de la suspension est imposée par les irrégularités de la surface sur laquelle se déplace le véhicule. Elle en diminue l'impact sur l'engin, réduisant la fatigue mécanique et l'usure excessive, améliorant le confort des passagers et maintenant le contact entre les roues et le sol malgré ses irrégularités : condition indispensable à la tenue de route.

Une suspension est généralement composée d'au moins un amortisseur. L'amortisseur peut éventuellement être réglé en fonction du terrain sur lequel circule le véhicule. Par exemple, un amortisseur peut être réglé dans trois positions distinctes : ouverte (c'est-à-dire que l'amortisseur est laissé entièrement libre), intermédiaire (l'amortisseur est laissé partiellement libre, c'est à dire que tout se passe comme si l'amortisseur utilisé était plus court), bloquée (c'est-à-dire que l'amortisseur ne fonctionne pas, c'est-à-dire que tout se passe comme si le véhicule n'était pas équipé de cet amortisseur). Notamment, le conducteur peut régler manuellement l'amortisseur en fonction du terrain. Par exemple,
- sur un terrain plat et dur, il peut bloquer l'amortisseur pour éviter un phénomène de pompage de la suspension,
- sur un terrain faiblement accidenté ou en montée, il peut mettre l'amortisseur dans une position intermédiaire pour un compromis entre rendement et motricité ;
- sur un terrain fortement accidenté, l'amortisseur est ouvert, etc.

Cette adaptation manuelle de l'amortisseur est sujette aux erreurs du conducteur : erreurs de saisie de réglage, erreurs d'évaluation des caractéristiques du parcours à venir... et est mise en oeuvre avant le début d'un parcours. Donc, si le conducteur commet une erreur dans le réglage de l'amortisseur ou qu'il modifie son parcours, l'amortisseur ne sera pas, respectivement plus, adapté au parcours avec les risques connus en termes de stabilité du véhicule.

Dans le cadre des vélos tout terrain (VTT), la technologie Ei Shock (marque déposée) propose un réglage automatisé de l'amortisseur en fonction de données mesurées par des capteurs placées sur la fourche, le pédalier, et la potence. L'adaptation est donc réalisée a posteriori. Le risque de manque de stabilité est toujours fort lors d'un changement rapide sur le parcours.

Un des buts de la présente invention est d'apporter des améliorations par rapport à l'état de la technique.

Un objet de l'invention est un contrôleur apte à régler automatiquement au moins un dispositif de liaison au sol d'un véhicule en fonction d'une donnée caractéristique prédite du parcours actuel du véhicule à partir de données fournies par au moins un capteur du dispositif de liaison au sol.

Ainsi, le contrôleur réglant automatiquement le dispositif de liaison au sol en fonction de données caractéristiques prédites du parcours actuel du dispositif de liaison à partir de données d'un capteur du dispositif de liaison au sol permet d'optimiser la stabilité du véhicule quel que soit le parcours notamment sur une route dégradée ou dans des virages...notamment afin d'éviter un déport du véhicule de sa trajectoire en prenant en considération différentes données caractéristiques relatives aux parcours telles que la vitesse, l'état de la chaussée, les conditions météorologiques, la pression des pneumatiques, etc. ; et certains accidents.

Avantageusement, le dispositif de liaison au sol du véhicule est au moins un dispositif parmi les suivants:
- au moins un amortisseur d'une suspension entre les masses suspendues du véhicule et les masses non suspendues du véhicule;
- au moins un pneumatique du véhicule.

Avantageusement, le contrôleur comporte au moins un transmetteur de commande de pression de pneumatique à un compresseur installé dans le véhicule, la pression commandée étant fonction d'une donnée caractéristique prédite du parcours actuel du véhicule.

Avantageusement, le contrôleur comporte au moins un transmetteur de position d'un amortisseur à un bloqueur apte à bloquer au moins partiellement l'amortisseur, la position d'amortisseur commandée étant fonction d'une donnée caractéristique prédite du parcours actuel du véhicule.

Un objet de l'invention est également un dispositif de liaison au sol d'un véhicule apte à être régler sur commande d'un contrôleur en fonction d'une donnée caractéristique prédite du parcours actuel du véhicule à partir de données fournies par au moins un capteur du dispositif de liaison au sol.

Un objet de l'invention est aussi un procédé de réglage automatique d'au moins un dispositif de liaison au sol d'un véhicule en fonction d'une caractéristique prédite du parcours actuel du véhicule à partir de données fournies par au moins un capteur du dispositif de liaison au sol.

Ainsi, le procédé de réglage automatique permet d'optimiser la stabilité du véhicule quel que soit le parcours notamment sur une route dégradée ou dans des virages...notamment afin d'éviter un déport du véhicule de sa trajectoire en prenant en considération différentes caractéristiques relatives aux parcours tels que la vitesse, l'état de la chaussée, les conditions météorologiques, la pression des pneumatiques, etc. ; et certains accidents.

En outre, cela permet d'optimiser le confort des passagers du véhicule (y compris du conducteur) durant le trajet en prenant en considération différentes caractéristiques relatives aux parcours tels que la vitesse, l'état de la chaussée, les conditions météorologiques, la pression des pneumatiques, etc.

Avantageusement, la donnée caractéristique prédite est fonction d'un historique du dispositif de liaison au sol du véhicule associant au moins un paramètre du dispositif de liaison au sol du véhicule lors d'un parcours précédent à au moins une donnée caractéristique du parcours précédent.

Ainsi, le réglage tient compte non seulement de données caractéristiques propres au parcours: type de chaussée, type de tracé... mais aussi de données relatives au système véhicule-conducteur ou véhicule/pilote puisqu'il tient compte de données relatives à des parcours précédents (vitesse, trajectoire... en fonction du type de chaussée et/ou de tracé et/ou de conditions météorologiques...).

Avantageusement, la donnée caractéristique est prédite en utilisant un modèle élaboré par apprentissage automatique.

Ainsi, si le véhicule n'a pas encore emprunté le trajet actuel ou du moins dans les conditions actuelles (modification de l'état de la chaussée, de conditions météorologiques...), un modèle élaboré par apprentissage automatique en fonction de parcours précédents permet néanmoins d'adapter le véhicule au parcours actuel.

Avantageusement, l'apprentissage automatique est réalisé à partir d'un historique du dispositif de liaison au sol du véhicule associant au moins un paramètre du dispositif de liaison au sol du véhicule lors d'un parcours précédent à au moins une donnée caractéristique du parcours précédent.

Avantageusement, le procédé de réglage comporte une prédiction du parcours actuel du véhicule à partir de données fournies par au moins un capteur du dispositif de liaison au sol.

Avantageusement, le procédé de réglage automatique comporte une génération d'un historique du dispositif de liaison au sol du véhicule associant au moins un paramètre du dispositif de liaison au sol du véhicule lors d'un parcours précédent à au moins une donnée caractéristique du parcours précédent.

Avantageusement, le procédé de réglage automatique comporte un apprentissage automatique à partir de l'historique généré fournissant un modèle de comportement du dispositif de liaison au sol.

Avantageusement, le procédé de réglage automatique comporte une estimation du parcours actuel en fonction de l'historique généré, le parcours actuel estimé fournissant au moins la donnée caractéristique prédite du parcours actuel.
- Avantageusement, une donnée caractéristique de parcours actuel comporte au moins un élément parmi les suivants :vitesse du véhicule,
- qualité de la route,
- type de tracé,
- météo

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif faisant partie d'un contrôleur de dispositif de liaison au sol d'un véhicule et étant conçus pour commander l'exécution des différentes étapes de ce procédé.

L'invention vise donc aussi un programme comprenant des instructions de code de programme pour l'exécution des étapes du procédé de réglage automatique lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Les caractéristiques et avantages de l'invention apparaîtront plus clairement à la lecture de la description, faite à titre d'exemple, et des figures s'y rapportant qui représentent :
- Figure 1, un schéma simplifié d'un contrôleur de dispositif de liaison au sol selon l'invention ;
- Figure 2a, 2b et 2c, des schémas simplifiés d'implémentation d'un contrôleur selon l'invention, respectivement en connexion avec au moins un pneumatique, en connexion avec au moins un amortisseur, dans un véhicule.
- Figure 3, un schéma simplifié d'un procédé de réglage automatique de dispositif de liaison au sol selon l'invention.

Par route est entendu, toutes surfaces permettant de rouler comme les routes, voies expresses, autoroutes, pistes, chemins mais aussi les pistes d'aéroport, voies ferrée, etc.

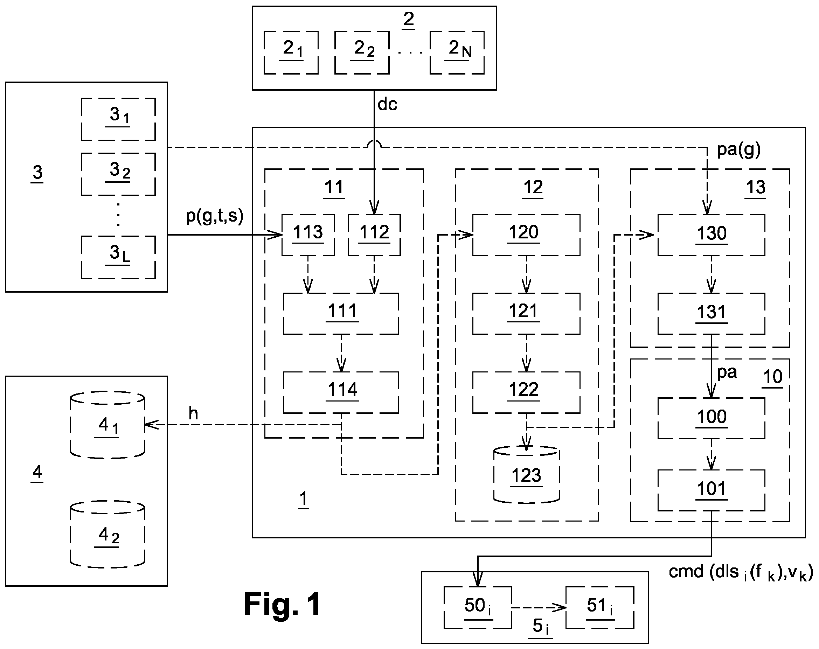

La figure 1 illustre un schéma simplifié d'un contrôleur de dispositif de liaison au sol selon l'invention.

Le contrôleur 1 apte à régler automatiquement au moins un dispositif de liaison au sol 5i d'un véhicule en fonction d'une donnée caractéristique prédite *pc₁...pc_{M}* du parcours actuel pa du véhicule à partir de données fournies *dc* par au moins un capteur 2ᵢ du dispositif de liaison au sol 5ᵢ.

Notamment, le contrôleur 1 comporte au moins un superviseur 10 apte à transmettre le réglage adapté *vk* au dispositif de liaison au sol 5i.

En particulier, le contrôleur 1 comporte un calculateur 100 d'une valeur de réglage vk d'un paramètre fk du dispositif de liaison au sol 5i. Ce calculateur 100 est apte à déterminer la valeur de réglage vk notamment en fonction d'une fonction ou de règles d'optimisation du dispositif de liaison au sol 5i à au moins une donnée caractéristique pc₁...pc_{M} d'un parcours. Ces règles d'optimisation sont en particulier stockées dans une base de données de règles (non illustrée). Le superviseur 10 comporte notamment ce calculateur 100.

En particulier, le contrôleur 1 comporte un générateur 101 d'une commande de réglage d'un dispositif de liaison au sol cmd(dlsᵢ(fₖ),vₖ). Cette commande *cmd* comporte notamment une valeur de réglage vk d'un paramètre fk du dispositif de liaison au sol 5i. Soit le contrôleur 1 est apte à transmettre directement cette commande au paramètre fk du dispositif de liaison au sol 5i pour déclencher le réglage, soit la commande cmd comporte aussi un identifiant du paramètre fk à régler et le contrôleur 1 est apte à transmettre la commande au dispositif de liaison au sol 5i qui est apte à régler le paramètre fk à la valeur vk. Ce générateur 101 de commande est notamment implémenté dans le superviseur 10.

Notamment, le contrôleur 1 comporte au moins un enregistreur des parcours précédents 11 apte à mémoriser au moins des données captées durant au moins un parcours précédent *dc* en relation avec au moins une données caractéristiques g,t,s du parcours précédent *p(g,t,s).*

En particulier, le contrôleur 1 comporte un récepteur 112 de données fournies dc fournies par un ou plusieurs capteurs 2₁ ... 2_{N}, notamment un capteur du dispositif de liaison au sol 2₅ᵢ et/ou un ensemble/système de capteurs 2 comportant plusieurs capteurs 2₁ ... 2_{N} du véhicule, tel que caméra(s), capteurs des pneumatiques, capteur(s) de pluie, accéléromètres, etc. Ces capteurs sont notamment des capteurs connectés dont les historiques de données sont conservés éventuellement à distance. Ce récepteur de données captées 112 est notamment implémenté dans l'enregistreur 11 des parcours précédents.

En particulier, le contrôleur 1 comporte un récepteur 113 de données relatives à un parcours *p(g,t,s)* en cours lors de la capture de données *dc.* Ce récepteur 113 de données relatives au parcours est notamment implémenté dans l'enregistreur 11 des parcours précédents.

En particulier, le contrôleur 1 comporte un coupleur 111 des données fournies dc fournies par un ou plusieurs capteur 2₁ ... 2_{N}, notamment un capteur du dispositif de liaison au sol 2₅ᵢ avec des données relatives à un parcours *p(g,t,s)* en cours lors de la capture de données *dc.* Les données associées constituent un historique des comportements des dispositifs de liaison au sol lors des parcours précédents. Ce coupleur 111 est notamment implémenté dans l'enregistreur 11 des parcours précédents.

En particulier, le contrôleur 1 comporte un enregistreur d'un historique des comportements 114 des dispositifs de liaison au sol lors des parcours précédents constitué notamment de données fournies dc fournies par un ou plusieurs capteur 2₁ ... 2_{N}, notamment un capteur du dispositif de liaison au sol 2₅ᵢ associées avec des données relatives à un parcours *p(g,t,s)* en cours lors de la capture de données *dc.* L'historique est notamment enregistré dans une base de données d'historique 4₁. Cet enregistreur d'historique 114 est notamment implémenté dans l'enregistreur 11 des parcours précédents.

Notamment, le contrôleur 1 comporte au moins un modélisateur de parcours 12, notamment d'un véhicule prédéterminé, et éventuellement conduit par un utilisateur donné, en particulier un modélisateur du comportement du dispositif de liaison au sol.

En particulier, le contrôleur 1 comporte un dispositif d'apprentissage automatique 120. Le dispositif d'apprentissage automatique 120 utilise un historique du dispositif de liaison au sol du véhicule *h(dslᵢ)* associant au moins un paramètre *fₖ* du dispositif de liaison au sol du véhicule lors d'un parcours précédent *p* à au moins une donnée caractéristique *g, t,* s du parcours précédent *p,* notamment un historique généré par le coupleur 111. Eventuellement, le dispositif d'apprentissage automatique 120 récupère les historiques des parcours précédents enregistrés dans une base de données d'historiques 4₁. Le véhicule est associé à un système d'historisation 4 comportant notamment la base de données d'historiques du comportement des dispositifs de liaison au sol du véhicule 41, une mémoire conservant l'empattement et la charge du véhicule 42, tel qu'une base de données d'historiques d'empattement et de charge, et éventuellement d'autres mémoire ou base de données d'historiques relatives à d'autres capteurs du véhicule, tel qu'une base de données multimédia (non illustrée) conservant un historique vidéo des caméras du véhicules.... Ce dispositif d'apprentissage automatique 120 est notamment implémenté dans le modélisateur de parcours 12.

En particulier, le contrôleur 1 comporte un générateur de modèle 121 à partir du résultat du dispositif d'apprentissage automatique 120. Eventuellement, un enregistreur 122 stocke le modèle créé dans une base de données de modèle 123. Le générateur de modèle 121 et/ou son enregistreur 123 sont notamment implémentés dans le modélisateur de parcours 12.

Notamment, le contrôleur 1 comporte au moins un prédicteur de parcours 13 apte à prédire un parcours en fonction de données captées dc.

En particulier, le contrôleur 1 comporte un chargeur de modèle 130 en fonction du parcours actuel *pa(g)* soit directement du modélisateur 12 et/ou du générateur de modèle 121 et/ou d'une base de données de modèles 123. Le parcours actuel *pa(g)* est fourni notamment par un dispositif de navigation 3₁, par exemple sous la forme d'une suite de coordonnées géographiques, ou de deux extrémités géographiques d'un trajet : départ et arrivée, et de routes calculées par le dispositif de navigation entre ces deux extrémités. Le dispositif de navigation 31 est notamment implémenté dans un système de navigation 3 comportant une base de données des routes 3_{L}, un dispositif d'accès 3₂ à des informations routières (travaux, bouchons, etc.), notamment via des communautés internet de type Waze (marque déposée), opendata, etc. et utilise les informations fournies par un ou plusieurs de ces dispositifs 3₂...3_{L} pour calculer le trajet du parcours actuel *pa.* Le chargeur de modèle 130 est notamment implémenté dans le prédicteur de parcours 13.

En particulier, le contrôleur 1 comporte un estimateur 131 du parcours actuel *ppa(pc₁...pc_{M})* à partir des données captées *dc,* notamment en utilisant l'historique des parcours précédents généré et/ou du modèle généré. L'estimateur 131 de parcours est notamment implémenté dans le prédicteur de parcours 13.

En particulier, le prédicteur de parcours 13 fournit au moins une donnée caractéristique prédite *pc₁...pc_{M}* du parcours actuel, voire le parcours prédit *ppa* au superviseur 10 qui est apte à transmettre au dispositif de liaison au sol 5i un réglage adapté *vk* à au moins une donnée caractéristique prédite fournie par le prédicteur 13, notamment sous la forme d'une commande cmd(dlsᵢ(fₖ), vₖ).

En particulier, le dispositif de liaison au sol 5ᵢ du véhicule est au moins un dispositif parmi les suivants:
- au moins un amortisseur d'une suspension entre les masses suspendues du véhicule et les masses non suspendues du véhicule;
- au moins un pneumatique du véhicule.

En particulier, le dispositif de liaison au sol 5i comporte l'élément de liaison au sol proprement dit 50i tel qu'un amortisseur, un pneumatique, et un ou plusieurs des éléments suivants :
- un capteur du dispositif de liaison au sol 2₅ᵢ,
- un dispositif électromécanique 51i, tel qu'un microcontrôleur ou un servomoteur, notamment un bloqueur d'amortisseur ou un compresseur pour pneumatique, etc.

Dans un mode de réalisation particulier, lorsqu'un véhicule se déplace pour la première fois sur une route, le contrôleur du véhicule peut interroger une base de données d'historiques communes entre plusieurs véhicules.

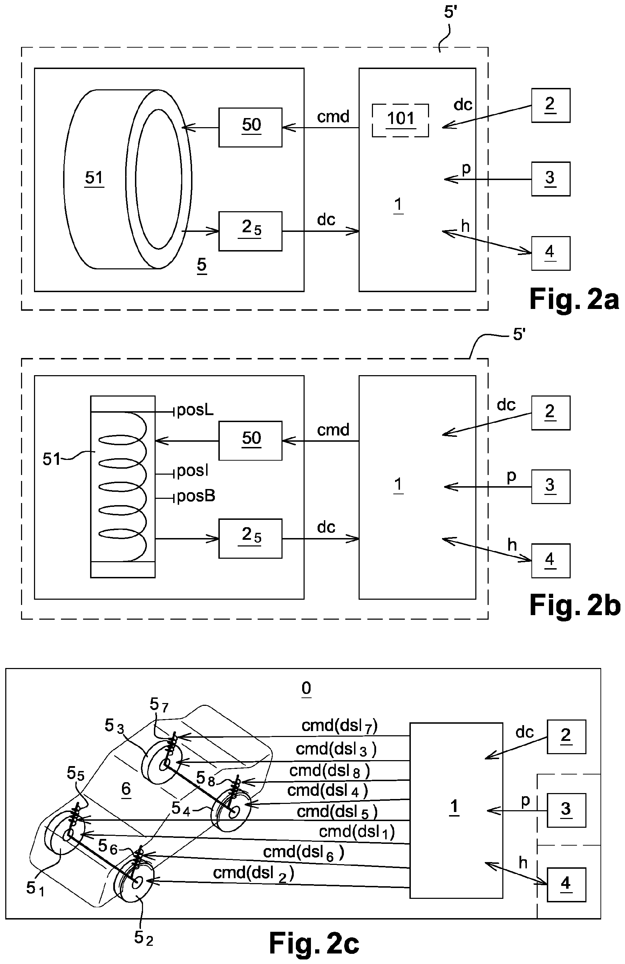

La figure 2a illustre un schéma simplifié d'implémentation d'un contrôleur selon l'invention en connexion avec au moins un pneumatique.

Un dispositif de liaison au sol 5 d'un véhicule, en particulier un pneumatique, est apte à être réglé sur commande d'un contrôleur 1 en fonction d'une donnée caractéristique prédite *pc₁...pc_{M}* du parcours actuel *pa* du véhicule à partir de données *dc* fournies par au moins un capteur 2₅ du dispositif de liaison au sol 5.

En particulier, le contrôleur 1 comporte au moins un transmetteur 101 de commande de pression de pneumatique à un compresseur 50 installé dans le véhicule (notamment dans le dispositif de liaison au sol 5). La pression commandée est fonction de la donnée caractéristique prédite du parcours actuel du véhicule.

Eventuellement, le dispositif de liaison au sol 5' comporte outre le pneumatique 51, le compresseur 50 et le capteur 2₅, le contrôleur 1 selon l'invention.

Un ou plusieurs capteurs 2, y compris au moins un capteur 2₅ du pneumatique 51 du véhicule, fournissent des données captées dc au contrôleur 1. Notamment, le au moins un capteur 2₅ du pneumatique fournit des données de pression du pneumatique, et éventuellement d'autre données tel qu'un degré d'usure, la température du pneumatique...

En particulier, le contrôleur 1 enregistre ces données avec des informations relatives au parcours durant la capture de ces données notamment sous forme d'un historique h dans un système d'historisation 4. Les informations relatives au parcours sont fournies au contrôleur 1, par exemple, par un système de navigation 3.

En particulier, le contrôleur 1 utilise les données captées dc du système de capture 2 (y compris du capteur 25 du dispositif de liaison au sol 5), notamment en consultant les historiques h du système d'historisation 4 pour commander cmd le compresseur 50. Par exemple, le contrôleur 1 modélise le comportement du dispositif au sol 5 en fonction du parcours actuel pour déterminer le réglage à effectuer.

La figure 2b illustre un schéma simplifié d'implémentation d'un contrôleur selon l'invention avec au moins un amortisseur.

La figure 2c illustre un schéma simplifié d'implémentation d'un contrôleur selon l'invention dans un véhicule.

Le véhicule 0 comporte quatre roues équipées de quatre pneumatiques 5₁, 5₂, 5₃, et 5₄, et quatre suspensions reliant le châssis 6 du véhicule 0 à chacune des quatre roues. Chaque suspension comporte respectivement un amortisseur 5₅, 5₆, 5₇, et 5₈.

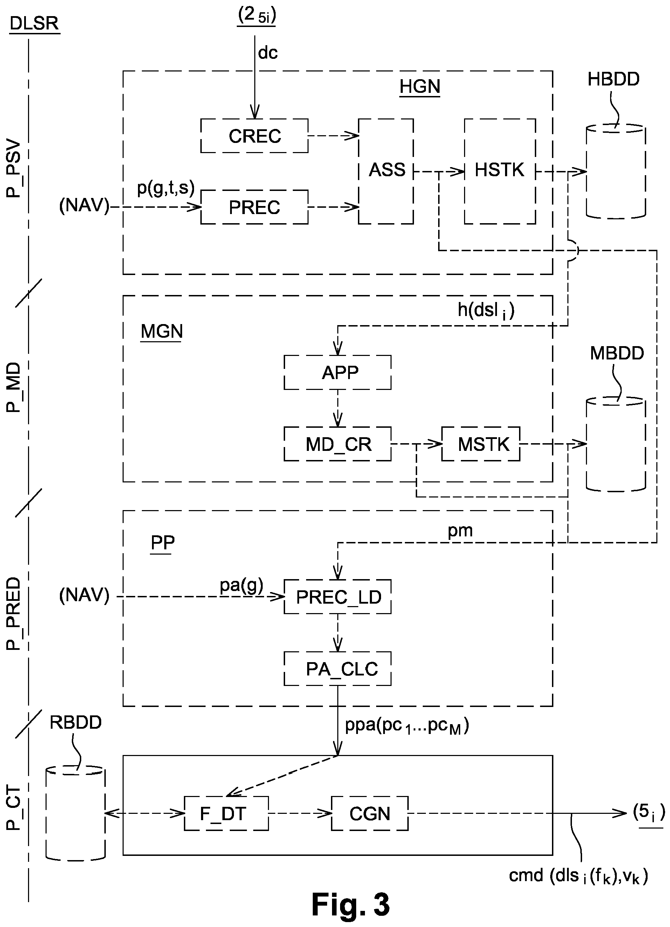

Eventuellement, chaque dispositif de liaison au sol 5₁ à 5₈ comporte son propre contrôleur 1 selon l'invention. Dans un mode de réalisation alternatif illustré par la figure 3a, le véhicule 0 comporte un contrôleur 1 qui est apte à régler automatiquement plusieurs voire la totalité des dispositifs de liaison au sol 5₁ à 5₈ du véhicule. Ainsi, les calculs du contrôleur 1 peuvent être mutualisés pour régler plusieurs dispositifs au sol réduisant les coûts de calcul du réglage automatique de l'ensemble des dispositifs au sol d'un véhicule.

Les pneumatiques 5₁, 5₂, 5₃, et 5₄ du véhicule 0, sont aptes à être réglés sur commande du contrôleur 1 en fonction d'une donnée caractéristique prédite *pc₁...pc_{M}* du parcours actuel pa du véhicule à partir de données dc fournies par au moins un capteur 2₅ du dispositif de liaison au sol 5.

En particulier, le contrôleur 1 comporte au moins un transmetteur 101 de commande de pression de pneumatique à un compresseur (non illustré) installé dans le véhicule (notamment dans le dispositif de liaison au sol 5₁, 5₂, 5₃, et 5₄ ou mutualisé deux par deux ou la totalité des pneumatiques). La pression commandée est fonction de la donnée caractéristique prédite du parcours actuel du véhicule.

Un ou plusieurs capteurs 2, y compris au moins un capteur 2₅ du pneumatique 51 du véhicule, fournissent des données captées dc au contrôleur 1. Notamment, pour chaque pneumatique 5₁, 5₂, 5₃, et 5₄, le au moins un capteur du pneumatique (non illustré) fournit des données de pression du pneumatique, et éventuellement d'autre données tel qu'un degré d'usure, la température du pneumatique...

Un dispositif de liaison au sol 5 d'un véhicule, en particulier un amortisseur, est apte à être réglé sur commande d'un contrôleur 1 en fonction d'une donnée caractéristique prédite *pc₁...pc_{M}* du parcours actuel *pa* du véhicule à partir de données *dc* fournies par au moins un capteur 2₅ du dispositif de liaison au sol 5.

En particulier, le contrôleur 1 comporte au moins un transmetteur 101 de commande de pression de pneumatique à un compresseur 50 installé dans le véhicule (notamment dans le dispositif de liaison au sol 5). La pression commandée est fonction de la donnée caractéristique prédite du parcours actuel du véhicule.

En particulier, le contrôleur comporte au moins un transmetteur 101 de position d'un amortisseur 5₅, 5₆, 5₇ et 5₈ à un bloqueur (non illsutré) apte à bloquer au moins partiellement l'amortisseur, la position d'amortisseur commandée étant fonction d'une donnée caractéristique prédite du parcours actuel du véhicule. L'amortisseur peut ainsi être positionné dans trois positions ou plus. Par exemple, le transmetteur 101 transmet une des trois positions suivants : libre *posL,* intermédiaire *posI* ou bloqué *posB.*

Un ou plusieurs capteurs 2, y compris au moins un capteur 2₅ d'un amortisseur 5₅, 5₆, 5₇ et 5₈ du véhicule, fournissent des données captées dc au contrôleur 1. Notamment, le au moins un capteur 2₅ de l'amortisseur fournit des données de fréquence d'oscillation de l'amortisseur, et éventuellement d'autre données tel qu'un degré d'usure, l'amplitude d'oscillation de l'amortisseur...

En particulier, le contrôleur 1 enregistre ces données avec des informations relatives au parcours durant la capture de ces données notamment sous forme d'un historique h dans un système d'historisation 4. Les informations relatives au parcours sont fournies au contrôleur 1, par exemple, par un système de navigation 3.

En particulier, le contrôleur 1 utilise les données captées dc du système de capture 2 (y compris du capteur 25 du dispositif de liaison au sol 5), notamment en consultant les historiques h du système d'historisation 4 pour commander cmd le compresseur connecté au pneumatique 5₁, 5₂, 5₃, ou 5₄. Par exemple, le contrôleur 1 modélise le comportement du dispositif au sol 5 en fonction du parcours actuel pour déterminer le réglage à effectuer.

En particulier, le contrôleur 1 utilise les données captées dc du système de capture 2 (y compris du capteur 25 du dispositif de liaison au sol 5), notamment en consultant les historiques h du système d'historisation 4 pour commander cmd le bloqueur connecté à l'amortisseur 5₅, 5₆, 5₇ ou 5₈. Par exemple, le contrôleur 1 modélise le comportement du dispositif au sol 5 en fonction du parcours actuel pour déterminer le réglage à effectuer.

Ainsi, le contrôleur permet de régler automatiquement les amortisseurs et les pneumatiques d'un véhicule conduit ou autonome, tel qu'un voiture, un vélo, un camion, un bus, un avion, un train...en cours de déplacement. Le réglage de ces amortisseurs et de ces pneumatiques dépend principalement de caractéristiques de parcours telles que la vitesse du véhicule, la qualité de la route empruntée.

Notamment, le contrôleur 1 est apte à prédire le parcours suivi par un conducteur du véhicule : trajet, vitesse... La prédiction du parcours permet au contrôleur 1 d'optimiser le réglage des dispositifs de liaison au sol du véhicule.

En particulier, le contrôleur comporte plusieurs éléments pour optimiser cette prédiction :
- un enregistreur de parcours précédents 11 apte à créer un historique des trajets parcourus par un véhicule, notamment conduit par un utilisateur donné, et des vitesses de déplacements ;
- un modélisateur de parcours 12 apte à créer un modèle de cet historique en utilisant notamment des méthodes dits de « machine Learning » en anglais, tels que des modèles de Markov cachés (Hidden Markov Models en anglais), ou des modèles statistiques, par exemple des modèles de champs aléatoires conditionnels (Conditional Radom Fields en anglais), etc. ;
- un prédicteur de parcours 13 apte, lors d'un déplacement du véhicule, à estimer un parcours, notamment un trajet et la vitesse du véhicule, en utilisant les modèles créés.

En particulier, le(s) contrôleur(s) de dispositifs de liaison au sol d'un premier véhicule peuvent partager des données : historiques, modèle avec les dispositifs au sol d'un deuxième véhicule distinct du premier. Par exemple, dans le cas où c'est le deuxième véhicule se déplace pour la première fois sur une route, le(s) contrôleur(s) récupère(nt) des données relatives au parcours (données manquantes): trajectoire, vitesse, historiques et/ou modèles, etc. auprès de contrôleur(s) de dispositif(s) de liaison au sol du premier véhicule. Les contrôleurs de dispositifs de liaison au sol de deux véhicules distincts partagent des données en utilisant notamment un protocole V2V (exemple : 802.11 .P ou 5G).

La figure 3 illustre un schéma simplifié d'un procédé de réglage automatique de dispositif de liaison au sol DLSR selon l'invention.

Le procédé de réglage automatique de dispositif de liaison au sol DLSR règle automatiquement *cmd(dslᵢ(fₖ),vₖ)* au moins un dispositif de liaison au sol 5i d'un véhicule en fonction d'une caractéristique prédite *pc₁...pc_{M}* du parcours actuel pa du véhicule à partir de données *dc* fournies par au moins un capteur 2₅ᵢ du dispositif de liaison au sol 5i.

En particulier, la donnée caractéristique prédite *pc₁...pc_{M}* est fonction d'un historique du dispositif de liaison au sol du véhicule *h(dslᵢ)* associant au moins un paramètre *fₖ* du dispositif de liaison au sol du véhicule lors d'un parcours précédent *p* à au moins une donnée caractéristique g, *t,* s du parcours précédent *p*.

En particulier, la donnée caractéristique *pc₁...pc_{M}* est prédite en utilisant un modèle *pm* élaboré par apprentissage automatique APP.

En particulier, l'apprentissage automatique APP est réalisé à partir d'un historique du dispositif de liaison au sol du véhicule *h(dslᵢ)* associant au moins un paramètre *fₖ* du dispositif de liaison au sol du véhicule lors d'un parcours précédent *p* à au moins une donnée caractéristique *g, t,* s du parcours précédent *p*.

En particulier, le procédé de réglage automatique de dispositif de liaison au sol DLSR comporte une prédiction du parcours actuel du véhicule PP à partir de données fournies *dc* fournies par au moins un capteur 2₅ᵢ du dispositif de liaison au sol 5i.

En particulier, le procédé de réglage automatique DLSR comporte une génération d'un historique du dispositif de liaison au sol du véhicule HGN associant au moins un paramètre *fₖ* du dispositif de liaison au sol du véhicule lors d'un parcours précédent *p* à au moins une donnée caractéristique *g, t,* s du parcours précédent *p.*

En particulier, le procédé de réglage automatique DLSR comporte un apprentissage automatique APP à partir de l'historique généré *h(dslᵢ)* fournissant un modèle de parcours *pm* en fonction de caractéristiques g du parcours pa.

En particulier, le procédé de réglage automatique DLSR comporte une estimation PP du parcours actuel en fonction de l'historique généré *h(dslᵢ),* le parcours actuel estimé *ppa* fournissant au moins la donnée caractéristique prédite *pc₁...pc_{M}* du parcours actuel.

En particulier, une donnée caractéristique *pc₁...pc_{M}* de parcours actuel comporte au moins un élément parmi les suivants :
- vitesse du véhicule *s*,
- qualité de la route *qr,*
- type de tracé *t*,
- météo *w*,
- coordonnées du parcours *g,*
- au moins une donnée caractéristique du véhicule :
   - poids à vide,
   - poids actuel,
   - coefficient d'aérodynamisme,
   - empattement,
   - carrossage,
   - parallélisme,
   - chasse,
   - l'anti-plongée,
   - l'anti-cabrage
   - au moins une donnée caractéristique liée à la géométrie de suspension ;
- au moins une donnée caractéristique du profil du conducteur : notamment le type de conduite ;« sportive », « écologique », « de bon père de famille » ...
- etc.

Les données captées dc fournies par un ou plusieurs capteur 2n, notamment un capteur du dispositif de liaison au sol 2₅ᵢ sont utilisées par le procédé de réglage automatique DLSR d'un dispositif de liaison au sol 5i pour adapter le réglage du dispositif de liaison au sol 5i en fonction au parcours actuel *pa.*

Notamment, le procédé de réglage automatique DLSR d'un dispositif de liaison au sol 5i comporte au moins une phase de contrôle P_CT durant laquelle le procédé de réglage automatique transmet le réglage adapté *vk* au dispositif de liaison au sol 5i.

En particulier, le procédé de réglage automatique DLSR du dispositif de liaison au sol 5i comporte une détermination F_DT d'une valeur de réglage vk d'un paramètre fk du dispositif de liaison au sol 5i. Cette détermination F_DT est effectuée notamment en fonction d'une fonction ou de règles d'optimisation du dispositif de liaison au sol 5i à au moins une donnée caractéristique pc₁...pc_{M} d'un parcours. Ces règles d'optimisation sont en particulier stockées dans une base de données de règles RBDD. Cette détermination F_DT est notamment effectuée durant la phase de contrôle P_CT.

En particulier, le procédé de réglage automatique DLSR du dispositif de liaison au sol 5i comporte une génération CGN d'une commande de réglage d'un dispositif de liaison au sol cmd(dlsᵢ(fₖ),vₖ). Cette commande *cmd* comporte notamment une valeur de réglage vk d'un paramètre fk du dispositif de liaison au sol 5i. Soit le procédé de réglage DLSR transmet directement cette commande au paramètre fk du dispositif de liaison au sol 5i pour déclencher le réglage, soit la commande cmd comporte aussi un identifiant du paramètre fk à régler et le procédé de réglage DLSR transmet la commande au dispositif de liaison au sol 5i qui règle le paramètre fk à la valeur vk. Cette génération de commande est notamment effectuée durant la phase de contrôle P_CT.

Notamment, le procédé de réglage automatique DLSR d'un dispositif de liaison au sol 5i comporte au moins une phase d'enregistrement des parcours précédents P_PSV durant laquelle le procédé de réglage automatique mémorise au moins des données captées durant au moins un parcours précédent *dc* en relation avec au moins une données caractéristiques *g,t,s* du parcours précédent *p(g,t,s).*

En particulier, le procédé de réglage automatique DLSR d'un dispositif de liaison au sol comporte une réception CREC de données fournies dc fournies par un ou plusieurs capteurs 2n, notamment un capteur du dispositif de liaison au sol 2₅ᵢ. Cette réception CREC de données captées est notamment effectuée durant la phase d'enregistrement des parcours précédents P_PSV.

En particulier, le procédé de réglage automatique DLSR d'un dispositif de liaison au sol comporte une réception PREC de données relatives à un parcours *p(g,t,s)* en cours lors de la capture de données *dc.* Cette réception PREC de données relatives au parcours est notamment effectuée durant la phase d'enregistrement des parcours précédents P_PSV.

En particulier, le procédé de réglage automatique DLSR d'un dispositif de liaison au sol comporte une association ASS des données fournies dc fournies par un ou plusieurs capteur 2n, notamment un capteur du dispositif de liaison au sol 2₅ᵢ avec des données relatives à un parcours *p(g,t,s)* en cours lors de la capture de données *dc.* Les données associées constituent un historique des comportements des dispositifs de liaison au sol lors des parcours précédents. Cette association ASS est notamment effectuée durant la phase d'enregistrement des parcours précédents P_PSV

En particulier, le procédé de réglage automatique DLSR d'un dispositif de liaison au sol comporte un enregistrement HSTK d'un historique des comportements des dispositifs de liaison au sol lors des parcours précédents constitué notamment de données fournies dc fournies par un ou plusieurs capteur 2n, notamment un capteur du dispositif de liaison au sol 2₅ᵢ associées avec des données relatives à un parcours *p(g,t,s)* en cours lors de la capture de données *dc.* L'historique est notamment enregistré dans une base de données d'historique HBDD. Cette enregistrement d'historique HSTK est notamment effectuée durant la phase d'enregistrement des parcours précédents P_PSV.

Eventuellement, le procédé de réglage automatique DLSR d'un dispositif de liaison au sol comporte une génération d'historique HGN comportant une ou plusieurs des étapes suivantes :
- une réception CREC de données fournies dc fournies par un ou plusieurs capteur 2n, notamment un capteur du dispositif de liaison au sol 2₅ᵢ,
- une réception PREC de données relatives à un parcours *p(g,t,s)* en cours lors de la capture de données *dc*, notamment lors de la réception CREC,
- une association ASS des données fournies dc fournies par un ou plusieurs capteur 2n, notamment un capteur du dispositif de liaison au sol 2₅ᵢ, notamment des données fournies à la réception CREC, avec des données relatives à un parcours *p(g,t,s)* en cours lors de la capture de données *dc*, notamment des données relatives au parcours reçues par la réception PREC,. Les données associées constituent un historique des comportements des dispositifs de liaison au sol lors des parcours précédent.
- un enregistrement HSTK d'un historique des comportements des dispositifs de liaison au sol lors des parcours précédents constitué notamment de données fournies dc fournies par un ou plusieurs capteur 2n, notamment un capteur du dispositif de liaison au sol 2₅ᵢ associées avec des données relatives à un parcours *p(g,t,s)* en cours lors de la capture de données *dc.* En particulier, l'enregistrement HSTK mémorise l'historique fournie par l'association ASS.
Cette génération d'historique HGN est notamment effectuée durant la phase d'enregistrement des parcours précédents P_PSV.

Notamment, le procédé de réglage automatique DLSR d'un dispositif de liaison au sol 5i comporte au moins une phase de modélisation de parcours P_MD, notamment d'un véhicule prédéterminé, et éventuellement conduit par un utilisateur donné, en particulier de modélisation du comportement du dispositif de liaison au sol.

En particulier, le procédé de réglage automatique DLSR d'un dispositif de liaison au sol 5i comporte un apprentissage automatique APP. L'apprentissage automatique APP est réalisé à partir d'un historique du dispositif de liaison au sol du véhicule *h(dslᵢ)* associant au moins un paramètre *fₖ* du dispositif de liaison au sol du véhicule lors d'un parcours précédent *p* à au moins une donnée caractéristique *g, t,* s du parcours précédent *p,* notamment un historique généré par l'association ASS. Eventuellement, l'apprentissage automatique APP récupère les historiques des parcours précédents enregistrés dans une base de données d'historiques BDD. Cet apprentissage automatique APP est notamment effectué durant la phase de modélisation de parcours P_MD.

En particulier, le procédé de réglage automatique DLSR d'un dispositif de liaison au sol 5i comporte une création d'un modèle MD_CR à partir du résultat de l'apprentissage automatique APP. Eventuellement, le modèle créé est enregistré MSTK dans une base de données de modèle MBDD. Par exemple, la base de données de modèle est distante du véhicule permettant de regrouper les modèles d'un utilisateur pour différents types de véhicules (voir différents types d'équipements de liaison au sol : pneu été ou pneu hiver, différentes marques d'amortisseurs...). La création de modèle MD_CR et/ou son enregistrement MSTK sont notamment effectués durant la phase de modélisation de parcours P_MD.

Eventuellement, le procédé de réglage automatique DLSR d'un dispositif de liaison au sol comporte une génération de modèle MGN comportant une ou plusieurs des étapes suivantes :
- un apprentissage automatique APP est réalisé à partir d'un historique du dispositif de liaison au sol du véhicule *h(dslᵢ)* associant au moins un paramètre *fₖ* du dispositif de liaison au sol du véhicule lors d'un parcours précédent *p* à au moins une donnée caractéristique *g, t,* s du parcours précédent *p ;*
- une création d'un modèle MD_CR à partir du résultat de l'apprentissage automatique, et
- un enregistrement MSTK du modèle créé.
La génération de modèle MGN est notamment effectuée durant la phase de modélisation de parcours P_MD.

Ainsi, lorsqu'un utilisateur s'installe au volant d'un véhicule, le modèle préalablement créé correspondant peut être chargé PREC_LD pour la prédiction de données caractéristiques, plus généralement pour l'estimation du parcours actuels PA_CLC.

Notamment, le procédé de réglage automatique DLSR d'un dispositif de liaison au sol 5i comporte au moins une phase de prédiction de parcours P_PRED durant laquelle un parcours est prédit en fonction de données captées *dc.*

En particulier, le procédé de réglage automatique de dispositif de liaison au sol DLSR comporte un chargement d'un modèle PREC_LD en fonction du parcours actuel *pa(g)* soit directement de la génération de modèle MGN et/ou de la création de modèle MD_CR et/ou d'une base de données de modèles MBDD. Le parcours actuel *pa(g)* est fourni notamment par un dispositif de navigation NAV, par exemple sous la forme d'une suite de coordonnées géographiques, ou de deux extrémités géographiques d'un trajet : départ et arrivée, et de routes calculées par le dispositif de navigation entre ces deux extrémités. Le chargement de modèle PREC_LD est notamment effectuée durant la phase de prédiction de parcours P_PRED.

En particulier, le procédé de réglage automatique de dispositif de liaison au sol DLSR comporte une estimation PA_CLC du parcours actuel *ppa(pc₁...pc_{M})* à partir des données captées dc, notamment en utilisant l'historique des parcours précédents généré HGN, ASS et/ou du modèle généré MGN, MD_CR. L'estimation de parcours est notamment effectuée durant la phase de prédiction de parcours P_PRED.

En particulier, le procédé de réglage automatique de dispositif de liaison au sol DLSR comporte une prédiction de parcours PP et notamment d'au moins un donnée caractéristique *pc₁...pc_{M}* du parcours actuel *ppa.* La prédiction de parcours PP comporte au moins une des deux étapes précédentes de chargement d'un modèle PREC_LD, et d'estimation du parcours actuel PA_CLC. La prédiction de parcours PP est notamment effectuée durant la phase de prédiction de parcours P_PRED.

Dans une première variante de l'invention, le procédé de réglage automatique effectue dans un premier temps un apprentissage automatique permettant de générer un modèle P_MD. Durant ce premier temps dit d'apprentissage, le réglage du dispositif de liaison au sol n'est pas adapté au parcours, par exemple il est réglé à une valeur par défaut. Dans un deuxième temps, le modèle n'est pas réévalué par le procédé de réglage automatique et est utilisé pour prédire des données caractéristiques du parcours actuel permettant au procédé de réglage automatique de commander un réglage adapté au parcours actuel du dispositif de liaison au sol en fonction de ce modèle.

Dans une deuxième variante de l'invention, chaque parcours est utilisé pour enrichir les connaissances du procédé de réglage automatique relativement au comportement des dispositifs de liaison au sol, même les parcours pour lesquels un dispositif de liaison au sol est réglé automatiquement par le procédé de réglage automatique selon l'invention. Ainsi, lors d'un parcours actuels, toutes les données captées lors des parcours précédents sont utilisés pour affiner, optimiser le réglage automatique du dispositif de liaison au sol, notamment en affinant le modèle de comportement du dispositif de liaison au sol et/ou du véhicule.

Un mode de réalisation particulier du procédé de réglage automatique d'un dispositif de liaison au sol est un programme comprenant des instructions de code de programme pour l'exécution des étapes du procédé de réglage automatique lorsque ledit programme est exécuté par un processeur.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Contrôleur de dispositif de liaison au sol d'un véhicule apte à régler automatiquement au moins un dispositif de liaison au sol en fonction d'une donnée caractéristique prédite du parcours actuel du véhicule à partir de données fournies par au moins un capteur du dispositif de liaison au sol du véhicule.

2. Contrôleur selon la revendication précédente, **caractérisé en ce que** le dispositif de liaison au sol du véhicule est au moins un dispositif parmi les suivants:
• au moins un amortisseur d'une suspension entre les masses suspendues du véhicule et les masses non suspendues du véhicule;
• au moins un pneumatique du véhicule.

3. Contrôleur selon l'une quelconque des revendications précédentes, **caractérisé en ce que** le contrôleur comporte au moins un transmetteur de commande de pression de pneumatique à un compresseur installé dans le véhicule, la pression commandée étant fonction d'une donnée caractéristique prédite du parcours actuel du véhicule.

4. Contrôleur selon l'une quelconque des revendications précédentes, **caractérisé en ce que** le contrôleur comporte au moins un transmetteur de position d'un amortisseur à un bloqueur apte à bloquer au moins partiellement l'amortisseur, la position d'amortisseur commandée étant fonction d'une donnée caractéristique prédite du parcours actuel du véhicule.

5. Dispositif de liaison au sol d'un véhicule apte à être réglé sur commande d'un contrôleur en fonction d'une donnée caractéristique prédite du parcours actuel du véhicule à partir de données fournies par au moins un capteur du dispositif de liaison au sol.

6. Procédé de réglage automatique d'au moins un dispositif de liaison au sol d'un véhicule en fonction d'une caractéristique prédite du parcours actuel du véhicule à partir de données fournies par au moins un capteur du dispositif de liaison au sol.

7. Procédé de réglage automatique selon la revendication précédente, **caractérisé en ce que** la donnée caractéristique prédite est fonction d'un historique du dispositif de liaison au sol du véhicule associant au moins un paramètre du dispositif de liaison au sol du véhicule lors d'un parcours précédent à au moins une donnée caractéristique du parcours précédent.

8. Procédé de réglage automatique selon l'une quelconque des revendications 6 ou 7, **caractérisé en ce que** la donnée caractéristique est prédite en utilisant un modèle élaboré par apprentissage automatique.

9. Procédé de réglage automatique selon la revendication précédente, **caractérisé en ce que** l'apprentissage automatique est réalisé à partir d'un historique du dispositif de liaison au sol du véhicule associant au moins un paramètre du dispositif de liaison au sol du véhicule lors d'un parcours précédent à au moins une donnée caractéristique du parcours précédent.

10. Procédé de réglage automatique selon l'une quelconque des revendications 6 à 9, **caractérisé en ce que** le procédé de réglage comporte une prédiction du parcours actuel du véhicule à partir de données fournies par au moins un capteur du dispositif de liaison au sol.

11. Procédé de réglage automatique selon l'une quelconque des revendications 6 à 10, **caractérisé en ce que** le procédé de réglage automatique comporte une génération d'un historique du dispositif de liaison au sol du véhicule associant au moins un paramètre du dispositif de liaison au sol du véhicule lors d'un parcours précédent à au moins une donnée caractéristique du parcours précédent.

12. Procédé de réglage automatique selon la revendication précédente, **caractérisé en ce que** le procédé de réglage automatique comporte un apprentissage automatique à partir de l'historique généré fournissant un modèle de comportement du dispositif de liaison au sol.

13. Procédé de réglage automatique selon l'une quelconque des revendications 11 ou 12, **caractérisé en ce que** le procédé de réglage automatique comporte une estimation du parcours actuel en fonction de l'historique généré, le parcours actuel estimé fournissant au moins la donnée caractéristique prédite du parcours actuel.

14. Procédé de réglage automatique l'une quelconque des revendications 6 à 13, **caractérisé en ce qu'**une donnée caractéristique de parcours actuel comporte au moins un élément parmi les suivants :
• vitesse du véhicule,
• qualité de la route,
• type de tracé,
• météo

15. Programme comprenant des instructions de code de programme pour l'exécution des étapes du procédé de réglage automatique selon l'une quelconque des revendications 6 à 14 lorsque ledit programme est exécuté par un processeur.
